# EUROPÄISCHE PATENTSCHRIFT

(11) **EP 3 771 381 B1**
(45) Veröffentlichungstag und Bekanntmachung des Hinweises auf die Patenterteilung: **11.09.2024**
(21) Anmeldenummer: 20183663.2
(22) Anmeldetag: 02.07.2020
(51) Int. Cl.: A47J 43/07

(54) **AUTOMATISCHE ABSCHALTEINRICHTUNG FÜR EIN KÜCHENGERÄT, KÜCHENGERÄT UND VERFAHREN**
KITCHEN APPLIANCE; AUTOMATIC SHUTDOWN DEVICE FOR A KITCHEN APPLIANCE; AND METHOD
DISPOSITIF D'ARRÊT AUTOMATIQUE POUR UN APPAREIL DE CUISINE, APPAREIL DE CUISINE ET PROCÉDÉ

(30) Priorität: 30.07.2019 DE 102019211304
(43) Veröffentlichungstag der Anmeldung: 03.02.2021
(73) Patentinhaber: BSH Hausgeräte GmbH, 81739 München (DE)
(72) Erfinder: Brunner, Andreas, 83301 Traunreut (DE)

(56) Entgegenhaltungen:
- WO-A1-2016/145430
- US-A1- 2009 097 351
- US-B1- 6 402 365

## Beschreibung

Die Erfindung betrifft eine Abschalteinrichtung zum Abschalten eines Elektromotors eines Küchengeräts nach dem Oberbegriff des Patentanspruchs 1, ein elektromotorisches Küchengerät und ein Verfahren zum Abschalten eines Elektromotors eines Küchengeräts.

Moderne Küchengeräte wie Öfen für den Hausgebrauch verfügen häufig über eine automatische Abschalteinrichtung. Die auch als Urlaubsschaltung bezeichnete Abschalteinrichtung bewirkt, dass der Ofen nach einer bestimmen Zeitdauer automatisch abgeschaltet wird und dieser somit seinen Betrieb automatisch beendet. Die Zeitdauer, wann die Abschalteinrichtung aktiv wird, ist von der jeweils eingestellten Ofentemperatur abhängig und somit auf eine temperaturbezogene Betriebsart beschränkt.

Aufgabe der Erfindung ist es, eine Abschalteinrichtung zum Abschalten eines elektromotorischen Küchengeräts zu schaffen, die eine automatische Abschaltung bei einer mechanischen Betriebsart wie Hacken, Raspeln, Kneten und dergleichen ermöglicht. Zudem ist es Aufgabe der Erfindung ein Küchengerät mit einer hohen Sicherheit sowie ein Verfahren zum Abschalten einer mechanischen Betriebsart eines Küchengeräts zu schaffen.

Die US 6 402 365 B1 zeigt ein programmierbares Küchengerät mit einer Abschalteinrichtung, die das Küchengerät automatisch nach einer vorbestimmten Zeit der Inaktivität abschaltet. In der US 2009/097351 A1 ist ein programmierbares Küchengerät mit einer Abschalteinrichtung gezeigt, die ebenfalls das Abschalten des Küchengeräts nach einer vorbestimmten Zeit der Inaktivität ermöglicht. In der WO 2016/145430 A1 ist ein programmierbares Küchengerät mit einer automatischen Displayabschaltung gezeigt.

Diese Aufgabe wird gelöst durch eine Abschalteinrichtung mit den Merkmalen des Patentanspruchs 1, durch ein Küchengerät mit den Merkmalen des Patentanspruchs 4 und durch ein Verfahren mit den Merkmalen des Patentanspruchs 5.

Eine erfindungsgemäße Abschalteinrichtung zum automatischen Abschalten eines elektrisch betriebenen Küchengeräts, insbesondere für den Hausgebrauch, das einen Elektromotor zum Antreiben eines Werkzeugs zum Verarbeiten von Lebensmitteln und/oder zum Zubereiten von Speisen aufweist, hat eine Zeitmesseinrichtung zur Messung einer Zeitdauer, eine Steuer- und Regeleinheit und einen Betriebsartenspeicher, der mindestens einer mechanischen Betriebsart eine maximale Bearbeitungsdauer bzw. Bearbeitungshöchstdauer zuordnet. Zudem hat die Abschalteinrichtung eine Eingabeeinrichtung zum Auswählen einer Betriebsart, wobei beim Erreichen der Bearbeitungshöchstdauer die Steuer- und Regeleinheit das Küchengerät automatisch abschaltet.

Ein beispielhaftes Küchengerät ist eine multifunktionale Küchenmaschine bzw. Küchengerät für die Verwendung im privaten Umfeld, der neben der reinen Verarbeitung der Lebensmittel auch die Zubereitung von Speisen ermöglicht. Solche multifunktionalen Küchenmaschinen sind auch als Cook- oder Food Processor bekannt. Die Formulierung "Küchengerät abschaltet" bedeutet, dass die Bestromung sämtlicher elektrische Verbraucher, die zur Verarbeitung des jeweiligen Lebensmittels bzw. der jeweiligen Speise notwendig sind, abgeschaltete werden. Beispiele sind neben dem Elektromotor Heizelemente zum Kochen, Schmelzen, Warmhalten und dergleichen. Dadurch, dass zumindest einer mechanischen Betriebsart eine maximale Betriebsdauer durch den Betriebsartenspeicher zugeordnet ist, kann eine automatische Abschaltung beim Hacken, Raspeln, Kneten und dergleichen erfolgen, so dass sich die Küchenmaschine nur bis zum Erreichen der maximalen Betriebsdauer der jeweils mechanischen Betriebsart im Leerlauf befindet. Dies spart Strom und erhöht die Sicherheit des Küchengeräts. Bevorzugterweise ist in dem Betriebsartenspeicher für jede Betriebsarte des Küchengeräts eine maximale Betriebsdauer hinterlegt. Beispiele sind in der folgenden Tabelle zusammengestellt, ohne abschließend zu sein:

| Betriebsart | Bearbeitungshöchstdauer [min] |
|---|---|
| Ruhen lassen | 300 |
| Aufschlagen | 5 |
| Hacken | 5 |
| Raspeln | 5 |
| Mahlen | 5 |
| Mischen | 20 |
| Schlagen | 15 |
| Rühren | 120 |
| Kneten | 40 |
| Aufschneiden | 10 |
| Teig gehen lassen | 90 |
| Schmelzen | 60 |
| Joghurt | 420 |
| Sous Vide | 300 |
| Warmhalten | 90 |
| Anschwitzen | 60 |
| Schmoren | 60 |
| Erhitzen | 60 |
| Erhitzen | 60 |
| Slow Cooking | 120 |
| Simmern | 90 |

Bei einer Ausführungsform sind die maximalen Betriebsdauern herstellerseitig vorgegeben, so dass ein Anwender nicht bei jedem Start des Betriebs gezwungen ist, eine maximale Dauer für die jeweilige Betriebsart einzugeben. Bevorzugterweise ist der Betriebsartenspeicher jedoch frei programmierbar, so dass die maximalen Betriebsdauern individuell geändert werden können.

Da zur mechanischen Verarbeitung des Lebensmittels bzw. zur Zubereitung der Speise stets der Elektromotor bestromt wird, hat die Abschalteinrichtung entweder eine Leistungsmesseinrichtung zur Messung einer elektrischen Leistungsabgabe des Elektromotors und die Steuer- und Regeleinheit ist dazu eingerichtet, das Küchengerät automatisch abzuschalten, wenn die Leistungsmesseinrichtung über eine bestimmte Zeitdauer einen konstanten bzw. nahezu konstanten Messwert (Leistungswert) erfasst. Mit anderen Worten, sobald der Elektromotor über einen längeren Zeitraum im Leerlauf bzw. quasi im Leerlauf betrieben wird, schaltet die Abschalteinrichtung das Küchengerät automatisch ab. Alternativ oder ergänzend ist eine Waage zur Erfassung eines Gewichts einer sich in einem Gefäß des Küchengeräts befindenden Lebensmittel- oder Speisenmenge, wobei die Steuer- und Regeleinheit dazu eingerichtet ist, das Küchengerät automatisch auszuschalten, wenn die Waage über eine bestimmte Zeitdauer einen konstanten bzw. nahezu konstanten Messwert (Gewichtswert) erfasst.

Die Individualisierung lässt sich erhöhen, wenn frei einstellbar ist, wie lange ein sogenannter Leerlauf- oder Ruhestrom des Elektromotors oder ein konstantes bzw. nahezu konstantes Gewicht gemessen wird, bevor die Steuer- und Regeleinheit das Küchengerät abschaltet.

Ein erfindungsgemäßes Küchengerät hat einen Elektromotor zum Antreiben eines Werkzeugs zum Verarbeiten von Lebensmitteln und/oder zur Zubereitung von Speisen und eine erfindungsgemäße automatische Abschalteinrichtung zum automatischen Abschalten beim Erreichen einer Bearbeitungs- bzw. Betriebshöchstdauer zumindest einer mechanischen Betriebsart.

Ein derartiges Küchengerät ermöglicht einen sicheren Betrieb, da bei einer versehentlichen Nichtabschaltung des Küchengeräts nach einer mechanischen Betriebsart das Küchengerät automatisch abschaltet. Ein beispielhaftes Küchengerät ist eine multifunktionale Küchenmaschine wie ein sogenannte Cook Prozessor für den häuslichen Gebrauch, der neben der reinen Verarbeitung der Lebensmittel auch die Zubereitung von Speisen ermöglicht.

Entweder schaltet die Abschalteinrichtung beim Erfassen eines konstanten bzw. nahezu konstanten leistungsbasierten Messwerts das Küchengerät automatisch ab. Hierdurch wird ein Leerlaufbetrieb vermieden. Alternativ oder ergänzend kann die Abschalteinrichtung beim Erfassen eines konstanten bzw. nahezu konstanten gewichtsbasierten Messwerts das Küchengerät automatisch abschalten. Hierdurch wird ebenfalls ein Leerlaufbetrieb vermieden.

Bei einem erfindungsgemäßen Verfahren zum Abschalten eines elektrisch betriebenen Küchengeräts, das einen Elektromotor zum Antreiben eines Werkzeugs zum Verarbeiten von Lebensmitteln aufweist, wird beim Erreichen einer Bearbeitungshöchstdauer zumindest einer mechanischen Betriebsart das Küchengerät automatisch abgeschaltet.

Das Küchengerät wird entweder ebenfalls beim Erfassen eines konstanten bzw. nahezu konstanten leistungsbasierten Messwertes des Elektromotors das Küchengerät automatisch abgeschaltet. Die Leistungsaufnahme bzw. ein aktueller Stromverbrauch des Elektromotors ist eine verlässliche Größe um zu beurteilen, ob eine mechanische Bearbeitung abgeschlossen ist. Alternativ oder ergänzend wird das Küchengerät automatisch abgeschaltet, wenn eine in das Küchengerät integrierte Waage einen konstanten bzw. nahezu konstanten gewichtsbasierten Messwert erfasst. Das Gewicht erlaubt eine sichere Bestimmung, ob eine Lebensmittelmenge hinzugegeben oder entnehmen worden ist und somit eine verlässliche Aussage darüber, ob die Bearbeitung abgeschlossen ist.

Sonstige vorteilhafte Ausführungsbeispiele der Erfindung sind Gegenstand weiterer Unteransprüche.

Im Folgenden wird ein bevorzugtes Ausführungsbeispiel der Erfindung anhand der anliegenden stark vereinfachten Figuren erläutert. Es zeigen:
- Figur 1: einen Schnitt durch einen Bereich eines erfindungsgemäßen Küchengeräts, in dem ein Elektromotor zum Antreiben eines Werkzeugs und eine Waage zur Messung eines Lebensmittelgewichts angeordnet ist, und
- Figur 2: je eine beispielhafte Stromkurve des Elektromotors im Betrieb und im Leerlauf.

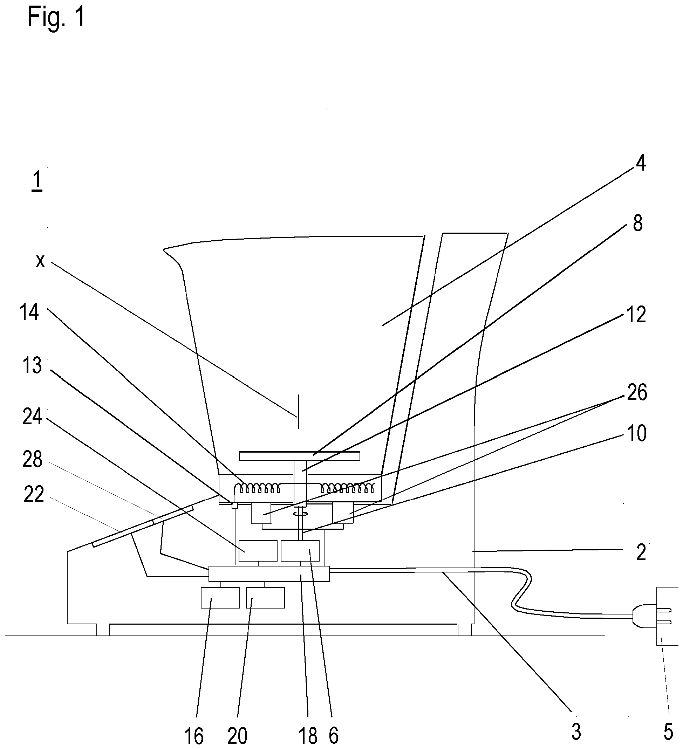

In Figur 1 ist ein Schnitt durch einen Bereich eines erfindungsgemäßen Küchengeräts 1 zum Verarbeiten von Lebensmitteln und/oder zur Zubereitung von Speisen gezeigt. Das Küchengerät 1 ist elektrisch betrieben und kann über eine Kabel 3 mit einem Stecker mit dem Stromnetz 5 verbunden werden. Das hier dargestellte Küchengerät 1 ist beispielsweise eine multifunktionale Küchenmaschine für den häuslichen Gebrauch. Eine solche Küchenmaschine ist auch als Cook- oder Food-Processor bekannt. Beispielhafte Betriebsarten sind temperaturbezogen und/oder mechanischer Natur wie: Ruhen lassen, Aufschlagen, Hacken, Raspeln, Mahlen, Mischen, Schlagen, Rühren, Kneten, Aufschneiden, Teig gehen lassen, Schmelzen, Joghurt, Sous Vide, Warmhalten, Anschwitzen, Schmoren, Erhitzen, Erhitzen, Slow Cooking und Simmern.

Das Küchengerät 1 hat eine Basis 2, auf der ein Gefäß 4 zur Aufnahme des Lebensmittels und/oder der Speise lösbar positioniert werden kann. Im Inneren der Basis 2 ist ein Elektromotor 6 zum Antreiben eines mechanischen Werkzeugs 8 wie eine Schneidscheibe angeordnet. Das Werkzeug 8 befindet sich hier bodenseitig in dem Gefäß 4. Zum Antreiben des Werkzeugs 8 hat der Elektromotor 6 eine Motorwelle 10, die eine Drehachse x des Werkzeugs 8 definiert. Die Motorwelle 10 ist aus dem Inneren der Basis 2 herausgeführt und über eine Kupplung 12 mit dem Werkzeug 8 lösbar koppelbar.

Zudem hat das Küchengerät 1 in seiner dem aufgesetzten Gefäß 4 zugewandten Seite eine elektrische Schnittstelle 13 zum Bestromen einer in einem Gefäßboden eingebrachten Heizeinrichtung 14 zum Durchführen der temperaturbezogenen Betriebsarten.

Zum automatischen Abschalten des Küchengeräts 1 hat dieses eine automatische Abschalteinrichtung. Diese umfasst eine Zeitmesseinrichtung 16 zur Messung einer Zeitdauer, eine Steuer- und Regeleinheit 18, einen Betriebsartenspeicher 20, eine Eingabeeinrichtung 22 zum Auswählen einer Betriebsart, eine Leistungsmesseinrichtung 24, eine Waage 26 und bevorzugterweise ein Display 28.

In dem Betriebsartenspeicher 20 sind sämtliche, von dem Küchengerät 1 durchführbare Betriebsarten mit jeweils einer maximalen Betriebsdauer bzw. einer Bearbeitungshöchstdauer hinterlegt. Nach dem Erreichen der Bearbeitungshöchstdauer wird das Küchengerät 1 mittels der Abschalteinrichtung bzw. mittels dessen Steuer- und Regeleinrichtung 18 abgeschaltet, d.h. eine Bestromung sämtlicher für die jeweilige Betriebsart notwendiger elektrischer Verbraucher wie die Heizeinrichtung 14 und/oder der Elektromotor 6 wird beendet. Beispielhafte Bearbeitungshöchstdauern sind in der folgenden, nicht abschließenden Tabelle hinterlegt.

| Betriebsart | Bearbeitungshöchstdauer [min] |
|---|---|
| Ruhen lassen | 300 |
| Aufschlagen | 5 |
| Hacken | 5 |
| Raspeln | 5 |
| Mahlen | 5 |
| Mischen | 20 |
| Schlagen | 15 |
| Rühren | 120 |
| Kneten | 40 |
| Aufschneiden | 10 |
| Teig gehen lassen | 90 |
| Schmelzen | 60 |
| Joghurt | 420 |
| Sous Vide | 300 |
| Warmhalten | 90 |
| Anschwitzen | 60 |
| Schmoren | 60 |
| Erhitzen | 60 |
| Erhitzen | 60 |
| Slow Cooking | 120 |
| Simmern | 90 |

Sowohl die Bearbeitungshöchstdauer, als auch die Betriebsart ist über die Eingabeeinrichtung 22 von einem Anwender frei programmierbar. Bevorzugterweise können über die Eingabeeinrichtung 22 auch neue bzw. weitere Betriebsarten mit ihrer jeweiligen Bearbeitungshöchstdauer in den Betriebsartenspeicher 20 geschrieben werden.

Die Zeitmesseinrichtung 16 hat eine integrierte Timerfunktion mit beiden Zählrichtungen - von einem Anfangswert aufwärts und abwärts. Zumindest die Restzeit der Bearbeitungshöchstdauer sowie die Betriebsart können über das Display 28 einem Anwender visuell angezeigt werden.

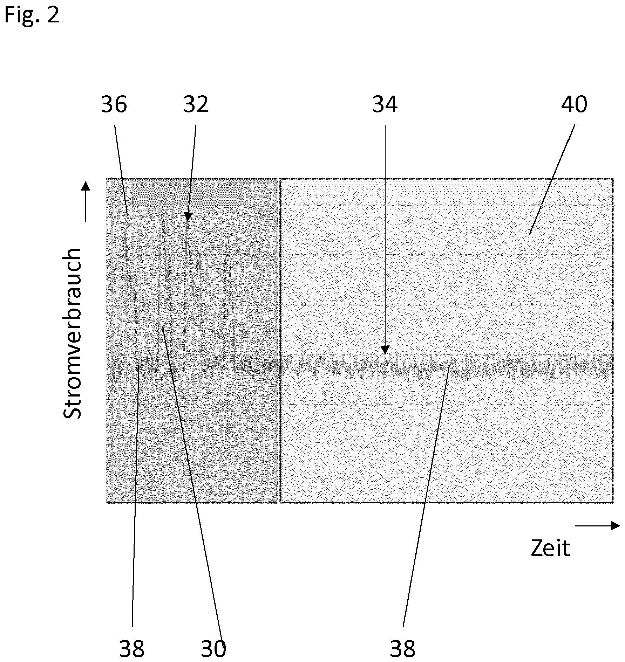

Die Leistungsmesseinrichtung 24 dient zur Messung einer elektrischen Leistungsabgabe des Elektromotors 6. Im Zusammenwirken mit der Zeitmesseinrichtung 16 und der Steuer- und Regeleinheit 18 kann das hier beispielhaft gezeigte Küchengerät 1 dann zusätzlich abgeschaltet werden, wenn die Leistungsmesseinrichtung 24 über eine bestimmte Zeitdauer einen konstanten bzw. nahezu konstanten Messwert erfasst. Mit anderen Worten, es wird nach jedem Lastfall 30 (Figur 2) die Dauer eines Ruhestroms bzw. Leerlaufstroms gemessen und beim Erreichen einer eingestellten Zeitdauer das Küchengerät 1 automatisch von der Abschalteinrichtung abgeschaltet. Zur Illustration wird auf die Stromkurven 32, 34 in Figur 2 verwiesen.

Im Normalbetrieb 36 (linke Stromkurve 32 in Figur 2) bei einer mechanischen Betriebsart wie Aufschneiden wechseln sich bei der Stromkurve 32 lastfreie Zustände 38 und die Lastfälle 30 ab. Aufgrund einer höheren Leistungsentnahme des Elektromotors 6 beim Berühren des Lebensmittels, beispielsweise einer aufzuschneidenden Karotte, mit dem Werkzeug 8 verbraucht er im Lastfall 30 mehr Strom. Im Lastfall 30 ist daher ein Anstieg des Motorstroms zu beobachten. In den lastfreien Zuständen 38 ist jedoch die Leistungsaufnahme des Elektromotors 6 minimal und somit merklich gegenüber den Lastfällen 30 reduziert. Die lastfreien Zuständen 38 entsprechen insbesondere einem Leerlauf bzw. Ruhestrom des Elektromotors 6.

Nach dem Beenden des Aufschneidens liegen keine Lastfälle 30 mehr vor, so dass der Elektromotor 6 eine minimale Leistungsaufnahme zeigt und nur seinen Ruhrstrom verbraucht (rechte Stromkurve 34 in Figur 2). Der Elektromotor 6 befindet sich im Leerlauf 40. Die Abschalteinrichtung und insbesondere die Steuer- und Regeleinrichtung 18 registriert Endzeitpunkte der Lastfälle bzw. den zeitlichen Übergang von einem Lastfall 30 in einen lastfreien Zustand 38 und startet jeweils zu den Endzeitpunkten die Zeitmesseinrichtung 16. Bei jedem neuen Lastfall 30 sowie bei jedem Betriebsartenwechsel wird die Zeitmesseinrichtung 16 auf ihren Anfangswert, bevorzugterweise t = 0 Sekunden, automatisch zurückgesetzt. Wenn nun die Zeitmesseinrichtung 16 eine voreingestellte Zeitdauer erreicht hat, wird das Küchengerät 1 automatisch abgeschaltet. Selbstverständlich wird die Zeitmesseinrichtung 16 auch bei jedem Abschalten des Küchengeräts 1 zurückgesetzt.

Die Waage 26 dient zur Messung eines Lebensmittelgewichts bzw. Speisengewichts in dem Gefäß 4. Sie durchsetzt die Basis 2 an der dem aufgesetzten Gefäß 4 zugewandten Seite und nimmt das Gefäß 4 unmittelbar auf. Das Gefäß 4 wird somit auf der Waage 26 in dem Küchengerät 1 positioniert. Im Zusammenwirken mit der Zeitmesseinrichtung 16 und der Steuer- und Regeleinheit 18 wird hier beispielhaft gezeigte Küchengerät 1 auch dann zusätzlich automatisch abgeschaltet, wenn die Waage 26 über eine bestimmte Zeitdauer einen konstanten bzw. nahezu konstanten Messwert erfasst. Mit anderen Worten, es wird nach jeder Gewichtsänderung die Zeitmesseinrichtung 16 zurückgesetzt und neu gestartet. Wenn eine eingestellte Zeitdauer erreicht wird, wird das Küchengerät 1 abgeschaltet.

Bei einem erfindungsgemäßen Verfahren zum Abschalten eines elektromotorischen Küchengeräts 1 wird beim Erreichen einer Bearbeitungshöchstdauer einer mechanischen Betriebsart das Küchengerät 1 automatisch abgeschaltet. Zudem wird es bevorzugt, wenn beim Erfassen eines konstanten bzw. nahezu konstanten leistungsbasierten Messwertes über eine eingestellte Zeitdauer des Elektromotors 6 das Küchengerät 1 abgeschaltet wird. Des Weiteren wird es bevorzugt, wenn beim Erfassen eines konstanten bzw. nahezu konstanten gewichtsbasierten Messwerts das Küchengerät 1 abgeschaltet wird.

Offenbart sind eine automatische Abschalteinrichtung für ein elektromotorisches Küchengerät, bei dem zumindest einer mechanische Betriebsart, bevorzugterweise sämtlichen Betriebsarten, eine Bearbeitungshöchstdauer bzw. Maximaldauer hinterlegt ist, wobei beim Erreichen der Maximaldauer das Küchengerät automatisch abgeschaltet wird, ein Küchengerät mit einer automatischen Abschalteinrichtung und ein Verfahren zum automatischen Abschalten eines elektromotorischen Küchengeräts.

### Bezugszeichenliste

- 1: Küchengerät
- 2: Basis
- 3: Kabel mit Stecker
- 4: Gefäß
- 5: Stromnetz
- 6: Elektromotor
- 8: Werkzeug
- 10: Motorwelle
- 12: Kupplung
- 13: elektrische Schnittstelle
- 14: Heizeinrichtung
- 16: Zeitmesseinrichtung
- 18: Steuer- und Regeleinheit
- 20: Betriebsartenspeicher
- 22: Eingabeeinrichtung
- 24: Leistungsmesseinrichtung
- 26: Waage
- 28: Display

- 30: Lastfall
- 32: Stromkurve
- 34: Stromkurve
- 36: Normalbetrieb
- 38: lastfreier Zustand
- 40: Leerlauf

- x: Drehachse

## Patentansprüche

1. Abschalteinrichtung zum Abschalten eines elektrisch betriebenen Küchengeräts (1), das einen Elektromotor (6) zum Antreiben eines Werkzeugs (8) zum Verarbeiten von Lebensmitteln aufweist, mit einer Zeitmesseinrichtung (16) zur Messung einer Zeitdauer, einer Steuer- und Regeleinheit (18), einem Betriebsartenspeicher (20), der mindestens einer mechanischen Betriebsart eine Bearbeitungshöchstdauer zuordnet, und mit einer Eingabeeinrichtung (22) zum Auswählen einer Betriebsart, wobei beim Erreichen der Bearbeitungshöchstdauer die Steuerund Regeleinheit (18) das Küchengerät (1) automatisch abschaltet, **dadurch gekennzeichnet, dass** die Abschalteinrichtung eine Leistungsmesseinrichtung (24) zur Messung einer elektrischen Leistungsabgabe des Elektromotors (6) aufweist und die Steuer- und Regeleinheit (18) dazu eingerichtet ist, das Küchengerät (1) automatisch abzuschalten, wenn die Leistungsmesseinrichtung (24) über eine bestimmte Zeitdauer einen konstanten bzw. nahezu konstanten Messwert erfasst, und/oder die Abschalteinrichtung eine Waage (26) zur Erfassung einer sich in einem Gefäß des Küchengeräts (1) befindenden Lebensmittelmenge aufweist und die Steuer- und Regeleinheit (18) dazu eingerichtet ist, das Küchengerät (1) automatisch auszuschalten, wenn die Waage (26) über eine bestimmte Zeitdauer einen konstanten bzw. nahezu konstanten Messwert erfasst.

2. Abschalteinrichtung nach Patentanspruch 1, wobei der Betriebsartenspeicher (20) progammierbar ist.

3. Abschalteinrichtung nach Patentanspruch 1, wobei die Zeitdauer einstellbar ist.

4. Küchengerät, mit einem Elektromotor (6) zum Antreiben eines Werkzeugs (8) zum Verarbeiten von Lebensmitteln und mit einer automatischen Abschalteinrichtung (16, 18, 20, 20, 22, 24, 26) nach einem der vorhergehenden Patentansprüche zum automatischen Abschalten beim Erreichen einer Bearbeitungshöchstdauer zumindest einer mechanischen Betriebsart.

5. Verfahren zum Abschalten eines elektrisch betriebenen Küchengeräts, das einen Elektromotor (6) zum Antreiben eines Werkzeugs (8) zum Verarbeiten von Lebensmitteln aufweist, wobei beim Erreichen einer Bearbeitungshöchstdauer zumindest einer mechanischen Betriebsart das Küchengerät (1) automatisch abgeschaltet wird **dadurch gekennzeichnet, dass** beim Erfassen eines konstanten bzw. nahezu konstanten leistungsbasierten Messwertes des Elektromotors (6) das Küchengerät (1) automatisch abgeschaltet wird, und/oder beim Erfassen eines konstanten bzw. nahezu konstanten gewichtsbasierten Messwerts einer Waage (26) das Küchengerät (1) automatisch abgeschaltet wird.

## Claims

1. Shutdown facility for shutting down an electrically operated kitchen appliance (1), which has an electric motor (6) for driving a tool (8) for processing foodstuffs, with a time measurement facility (16) for measuring a length of time, a control and regulation unit (18), an operating mode memory (20), which assigns a maximum processing duration to at least one mechanical operating mode, and with an input facility (22) for selecting an operating mode, wherein the control and regulation unit (18) shuts down the kitchen appliance (1) automatically when the maximum processing duration is reached, **characterised in that** the shutdown facility has a power measurement facility (24) for measuring an electrical power output of the electric motor (6) and the control and regulation unit (18) is configured to shut down the kitchen appliance (1) automatically when the power measurement facility (24) detects a constant or almost constant measurement value over a particular length of time, and/or the shutdown facility has a set of scales (26) for detecting an amount of foodstuff located in a container of the kitchen appliance (1) and the control and regulation unit (18) is configured to shut down the kitchen appliance (1) automatically when the scales (26) detects a constant or almost constant measurement value over a particular length of time.

2. Shutdown facility according to claim 1, wherein the operating mode memory (20) is programmable.

3. Shutdown facility according to claim 1, wherein the length of time can be set.

4. Kitchen appliance, with an electric motor (6) for driving a tool (8) for processing foodstuffs and with an automatic shutdown facility (16, 18, 20, 20, 22, 24, 26) according to one of the preceding claims for shutting down automatically when a maximum processing duration of at least one mechanical operating mode is reached.

5. Method for shutting down an electrically operated kitchen appliance, which has an electric motor (6) for driving a tool (8) for processing foodstuffs, wherein the kitchen appliance (1) is shut down automatically when a maximum processing duration of at least one mechanical operating mode is reached, **characterised in that** the kitchen appliance (1) is shut down automatically when a constant or almost constant power-based measurement value of the electric motor (6) is detected, and/or the kitchen appliance (1) is shut down automatically when a constant or almost constant weight-based measurement value of a set of scales (26) is detected.

## Revendications

1. Dispositif d'arrêt pour l'arrêt d'un appareil de cuisine fonctionnant à l'électricité (1), lequel présente un moteur électrique (6) pour l'entraînement d'un ustensile (8) nécessaire au traitement d'aliments, comprenant un dispositif de mesure du temps (16) pour la mesure d'une durée, une unité de commande et de réglage (18), une mémoire de modes de fonctionnement (20), laquelle subordonne une durée maximale de traitement à au moins un type de fonctionnement mécanique et un dispositif d'introduction de données (22) pour la sélection d'un mode de fonctionnement, dans lequel à l'expiration de la durée maximale de traitement, l'unité de commande et de réglage (18) arrête automatiquement l'appareil de cuisine (1), **caractérisé en ce que** le dispositif d'arrêt présente un dispositif de mesure de la puissance (24) pour la mesure d'une puissance absorbée électrique du moteur électrique (6) et l'unité de commande et de réglage (18) est configurée pour arrêter automatiquement l'appareil de cuisine (1) quand le dispositif de mesure de la puissance (24) détecte sur une durée déterminée, une valeur mesurée constante ou, selon le cas, presque constante, et/ou le dispositif d'arrêt présente une balance (26) pour la détection d'une quantité d'aliment se trouvant dans un récipient de l'appareil de cuisine (1) et l'unité de commande et de réglage (18) est configurée pour couper automatiquement l'appareil de cuisine (1) quand la balance (26) détecte sur une durée déterminée, une valeur mesurée constante ou, selon le cas, presque constante.

2. Dispositif d'arrêt selon la revendication 1, dans lequel la mémoire de modes de fonctionnement (20) est programmable.

3. Dispositif d'arrêt selon la revendication 1, dans lequel la durée est réglable.

4. Appareil de cuisine, comprenant un moteur électrique (6) pour l'entraînement d'un ustensile (8) nécessaire au traitement d'aliments, et comprenant un dispositif d'arrêt automatique (16, 18, 20, 20, 22, 24, 26) selon l'une des revendications précédentes pour l'arrêt automatique à l'expiration d'une durée maximale de traitement d'au moins un mode de fonctionnement mécanique.

5. Procédé d'arrêt d'un appareil de cuisine fonctionnant à l'électricité, lequel présente un moteur électrique (6) pour l'entraînement d'un ustensile (8) nécessaire au traitement d'aliments, dans lequel à l'expiration d'une durée maximale de traitement d'au moins un mode de fonctionnement mécanique, l'appareil de cuisine (1) s'arrête automatiquement, **caractérisé en ce que** lors de la détection d'une valeur mesurée du moteur électrique (6), constante ou, selon le cas presque constante, basée sur la puissance, l'appareil de cuisine (1) s'arrête automatiquement, et/ou lors de la détection d'une valeur mesurée d'une balance (26), constante ou, selon le cas presque constante, basée sur la masse, l'appareil de cuisine (1) s'arrête automatiquement.
